(19) Europäisches Patentamt
European Patent Office
Office européen des brevets

(11) **EP 4 657 165 A2**

(12) **EUROPEAN PATENT APPLICATION**

(43) Date of publication:
**03.12.2025  Bulletin 2025/49**

(21) Application number: **25155717.9**

(22) Date of filing: **04.02.2025**

(51) International Patent Classification (IPC):
**G03G 15/00** *(2006.01)*

(52) Cooperative Patent Classification (CPC):
**G03G 15/5054; G03G 15/50; G03G 15/5008;
G03G 15/6541;** G03G 15/6582; G03G 2215/00599;
G03G 2215/00814; G03G 2215/00822;
G03G 2215/00877

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.05.2024  JP 2024085731**

(71) Applicant: **FUJIFILM Business Innovation Corp.
Minato-ku
Tokyo (JP)**

(72) Inventors:
• **KAWAGUCHI, Ryoji**
  **Yokohama-shi, Kanagawa (JP)**
• **KOMATSU, Hitoshi**
  **Yokohama-shi, Kanagawa (JP)**

• **SODA, Takeshi**
  **Yokohama-shi, Kanagawa (JP)**
• **MIYAZAKI, Kenichi**
  **Yokohama-shi, Kanagawa (JP)**
• **ISHIHARA, Hiroki**
  **Yokohama-shi, Kanagawa (JP)**
• **OYAMADA, Satoru**
  **Yokohama-shi, Kanagawa (JP)**
• **KAWAKAMI, Takashi**
  **Yokohama-shi, Kanagawa (JP)**
• **SUWA, Takuma**
  **Yokohama-shi, Kanagawa (JP)**

(74) Representative: **Kurig, Thomas
Becker Kurig & Partner
Patentanwälte mbB
Bavariastraße 7
80336 München (DE)**

(54) **IMAGE FORMING SYSTEM AND PROGRAM**

(57)     An image forming system includes an image forming mechanism configured to form an image on a recording medium and a processor configured to stop rotation of a rotating member in the image forming mechanism when time, calculated by subtracting time required for image quality adjustment of an image to be formed from time required for post-processing of a recording medium on which an image is formed in a post- processing apparatus, is longer than set threshold time.

FIG. 1

## Description

Background

(i) Technical Field

The present disclosure relates to an image forming system and a program.

(ii) Related Art

Japanese Unexamined Patent Application Publication No. 2007-033829 discloses an image forming apparatus configured to reduce a decrease in productivity by instructing an image quality adjustment execution unit to execute image quality adjustment so that post-processing performed by a post-processing unit on a recording medium on which an image is formed is synchronized with the image quality adjustment performed to stabilize the image quality of the image.

Japanese Unexamined Patent Application Publication No. 2007-050545 discloses an image forming apparatus configured to reduce downtime by controlling an image forming unit to execute adjustment processing for maintaining image quality in parallel with the execution of post-processing on a recording medium in a post-processing unit.

Summary

When bookbinding or the like is performed using an image forming system, it is necessary to stop the supply of a next set of sheets until post-processing such as stapling or cutting performed by a post-processing apparatus coupled at a subsequent stage is completed. However, with the rotation of rotating members such as a photoreceptor drum and an intermediate transfer belt in an image forming mechanism being always stopped until the post-processing is completed, image formation cannot be immediately resumed even when the image formation is to be executed again, and productivity of the image formation decreases. In order to prevent the productivity from decreasing, it is necessary that the rotating members are continuously rotated until the post-processing is completed. There is a case that the productivity is increased by performing image quality adjustment in an image forming apparatus using the waiting time until the post-processing is completed. However, the image quality adjustment is not performed every time in the waiting time until the post-processing is completed, and when the image quality adjustment is unnecessary, the rotating member in the image forming mechanism continues idle rotation. Further, even when the image quality adjustment is quickly completed, the idle rotation of the rotating member occurs. In addition, there arises a problem that as the idle rotation time of the rotating member increases, service life of the rotating member is shortened.

Accordingly, it is an object of the present disclosure to provide an image forming system and a program capable of extending the service life of a rotating member in an image forming mechanism without decreasing productivity of image formation, in comparison with a case that the rotating member of the image forming mechanism is continuously rotated when post-processing of a recording medium on which an image is formed is executed in a post-processing apparatus.

According to a first aspect of the present disclosure, there is provided an image forming system including an image forming mechanism configured to form an image on a recording medium and a processor configured to stop rotation of a rotating member in the image forming mechanism when time, calculated by subtracting time required for image quality adjustment of an image to be formed from time required for post-processing of a recording medium on which an image is formed in a post-processing apparatus, is longer than set threshold time.

According to a second aspect of the present disclosure, in the image forming system according to first aspect, the processor may be configured not to stop the rotation of the rotating member in the image forming mechanism when the time, calculated by subtracting the time required for image quality adjustment of an image to be formed from the time required for the post-processing of a recording medium on which an image is formed in the post-processing apparatus, is equal to or less than the set threshold time.

According to a third aspect of the present disclosure, in the image forming system according to the first or second aspect, the threshold time may be calculated based on an image forming speed when an image is formed in the image forming mechanism.

According to a fourth aspect of the present disclosure, in the image forming system according to the third aspect, the threshold time calculated based on the image forming speed may be a total value of time required to stop the rotating member, minimum time required to keep a stop state of the rotating member, and time required to restart the stopped rotating member to a steady speed again at a certain image forming speed.

According to a fifth aspect of the present disclosure, in the image forming system according to any one of the first to fourth aspects, the time required for the image quality adjustment of an image to be formed may be calculated based on an image forming speed when an image is formed in the image forming mechanism.

According to a sixth aspect of the present disclosure, in the image forming system according to the fifth aspect, the time required for the image quality adjustment of an image to be formed may be calculated by dividing an image quality adjustment distance required in accordance with a type of the image quality adjustment to be executed by the image forming speed.

According to a seventh aspect of the present disclosure, in the image forming system according to any one of the first to sixth aspects, the processor may be configured to receive a selection result indicating which one of a productivity priority mode and a service life priority mode is selected, in a case that the productivity priority mode is selected, when the time, calculated by subtracting the time required for the image quality adjustment of an image to be formed from the time required for the post-processing of a recording medium on which an image is formed in the post-processing apparatus, is longer than the set threshold time, the rotation of the rotating member in the image forming mechanism may be stopped, and in a case that the service life priority mode is selected, even when the time, calculated by subtracting the time required for the image quality adjustment of an image to be formed from the time required for the post-processing of a recording medium on which the image is formed in the post-processing apparatus, is equal to or less than the set threshold time, the rotation of the rotating member in the image forming mechanism may be stopped.

According to an eighth aspect of the present disclosure, there is provided a program causing a computer to execute a process including acquiring time required for post-processing of a recording medium on which an image is formed in a post-processing apparatus, and stopping rotation of a rotating member in an image forming mechanism for forming an image on a recording medium when time, calculated by subtracting time required for image quality adjustment of an image to be formed from the acquired time required for the post-processing, is longer than set threshold time.

With the image forming system of the first aspect, it is possible to extend the service life of the rotating member in the image forming mechanism without decreasing productivity of image formation, in comparison with a case that the rotating member of the image forming mechanism is continuously rotated when post-processing of a recording medium on which an image is formed is executed in the post-processing apparatus.

With the image forming system of the second aspect, it is possible to extend the service life of the rotating member in the image forming mechanism without decreasing productivity of image formation, in comparison with a case that the rotating member of the image forming mechanism is continuously rotated when post-processing of a recording medium on which an image is formed is executed in the post-processing apparatus.

With the image forming system of the third aspect, even when the image forming speed changes, it is possible to calculate the threshold time according to the image forming speed.

With the image forming system of the fourth aspect, it is possible to set, as the threshold time, time required from stopping of the rotating member to restarting of the rotating member.

With the image forming system of the fifth aspect, even when the image forming speed changes, it is possible to calculate the image quality adjustment time according to the image forming speed.

With the image forming system of the sixth aspect, it is possible to calculate the image quality adjustment time according to the type of image quality adjustment to be executed.

With the image forming system of the seventh aspect, a user can select whether to prioritize productivity or extending the service life of the rotating member.

With the program of the eighth aspect, it is possible to extend the service life of the rotating member in the image forming mechanism without decreasing productivity of image formation, in comparison with a case that the rotating member of the image forming mechanism is continuously rotated when post-processing of a recording medium on which an image is formed is executed in the post-processing apparatus.

Brief Description of the Drawings

Exemplary embodiments of the present disclosure will be described in detail based on the following figures, wherein:

Fig. 1 is a diagram illustrating a system configuration of an image forming system according to an exemplary embodiment of the present disclosure;
Fig. 2 is a block diagram illustrating a hardware configuration of an image forming apparatus according to an exemplary embodiment of the present disclosure;
Fig. 3 is a block diagram illustrating a functional configuration of the image forming apparatus and a post-processing apparatus according to an exemplary embodiment of the present disclosure;
Fig. 4 illustrates an example of a calculation table of image quality adjustment time;
Fig. 5 illustrates an example of a calculation table of inactivation time, stop time, and activation time of a rotating member;
Fig. 6 is a flowchart for explaining determination processing of whether or not to stop a rotating member in a print controller;
Fig. 7 is a chart for explaining timing when the rotating member is stopped;
Fig. 8 is a chart for explaining timing when the rotating member is not stopped; and
Fig. 9 is a chart illustrating operation timing of the image forming apparatus during post-processing time when a service life priority mode is selected.

Detailed Description

Next, an exemplary embodiment of the present disclosure will be described in detail with reference to the drawings.

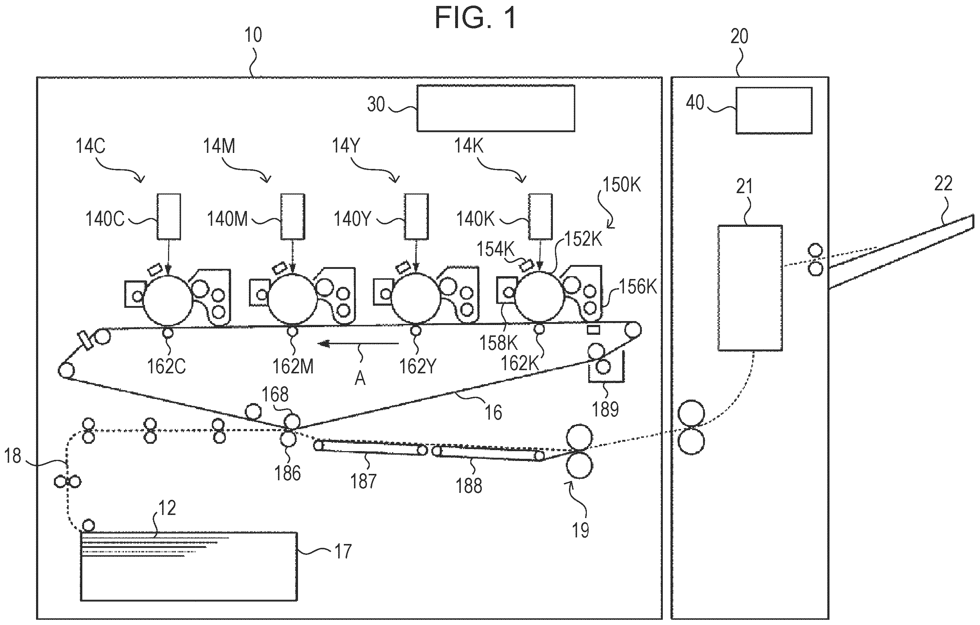

Fig. 1 is a diagram illustrating a system configuration of an image forming system according to the exemplary embodiment of the present disclosure.

As illustrated in Fig. 1, the image forming system of the present exemplary embodiment includes an image forming apparatus 10 and a post-processing apparatus 20.

The image forming apparatus 10 forms an image on a recording medium such as a print sheet. The post-processing apparatus 20 performs post-processing, such as stapling processing, cutting processing, bookbinding processing, and folding processing, on a recording medium on which an image is formed by the image forming apparatus 10.

The image forming apparatus 10 includes four image forming units 14K, 14Y, 14M, and 14C, an intermediate transfer belt 16, a sheet tray 17, a sheet transport path 18, a fixing device 19, and a print controller 30. The image forming apparatus 10 has a printer function of printing image data received from a personal computer (not illustrated) or the like.

The print controller 30 performs image processing such as gradation correction and resolution correction on image data input from an external terminal device (not illustrated) or the like via a network line such as a local area network (LAN), and executes processing such as generating an image based on the image data by controlling the operation of the image forming units 14.

The four image forming units 14K, 14Y, 14M, and 14C are provided corresponding to colors constituting a color image. In the present exemplary embodiment, the four image forming units 14K, 14Y, 14M, and 14C corresponding to respective colors of black (K), yellow (Y), magenta (M), and cyan (C) are arranged horizontally at regular intervals along the intermediate transfer belt 16. The intermediate transfer belt 16 rotates as an intermediate transfer body in a direction of arrow A in the drawing. The four image forming units 14K, 14Y, 14M, and 14C sequentially form toner images of the respective colors based on image data input from the print controller 30, and transfer (first transfer) the toner images to the intermediate transfer belt 16 at a timing when a plurality of the toner images are laid on top of the other. The order of the colors of the image forming units 14K, 14Y, 14M, and 14C is not limited to the order of black (K), yellow (Y), magenta (M), and cyan (C), and any order is possible, such as the order of yellow (Y), magenta (M), cyan (C), and black (K).

The sheet transport path 18 is disposed below the intermediate transfer belt 16. A recording medium 12 supplied from the sheet tray 17 is transported on the sheet transport path 18, the toner images of the respective colors transferred in multiple layers onto the intermediate transfer belt 16 are collectively transferred (second transfer), the transferred toner images are fixed by the fixing device 19, and the recording medium 12 is discharged to the outside along an arrow B.

Next, each configuration of the image forming apparatus 10 will be described in more detail.

The image forming units 14K, 14Y, 14M, and 14C (image forming units) are horizontally arranged in a parallel manner at regular intervals, and have substantially the same configuration except that the colors of images to be formed are different. The image forming unit 14K will be described below. Note that the configuration of each image forming unit 14 is distinguished by adding K, Y, M, or C.

The image forming unit 14K includes an exposure device 140K that forms an electrostatic latent image by performing exposure processing in accordance with image data input from the print controller 30, and an image forming device 150K in which an electrostatic latent image is formed by the exposure device 140K.

The exposure device 140K exposes a photoreceptor drum 152K of the image forming device 150K by irradiating the photoreceptor drum 152K with laser light controlled based on the image data from the print controller 30.

The image forming device 150K includes the photoreceptor drum 152K as an image carrier that rotates at a predetermined rotation speed along the direction of arrow A, a charging device 154K that uniformly charges a surface of the photoreceptor drum 152K, a developer 156K that develops an electrostatic latent image formed on the photoreceptor drum 152K exposed by the exposure device 140K, and a cleaning device 158K. The photoreceptor drum 152K is uniformly charged by the charging device 154K, and an electrostatic latent image is formed thereon by the laser light radiated by the exposure device 140K. The electrostatic latent image formed on the photoreceptor drum 152K is developed with black (K) toner by the developer 156K and transferred to the intermediate transfer belt 16. Residual toner, paper dust, and the like adhering to the photoreceptor drum 152K after the transfer process of the toner image are removed by the cleaning device 158K.

The other image forming units 14Y, 14M, and 14C also form toner images of the respective colors of yellow (Y), magenta (M), and cyan (C) and transfer the formed toner images of the respective colors to the intermediate transfer belt 16 in the same manner as described above.

On the intermediate transfer belt 16, first transfer rolls 162K, 162Y, 162M, and 162C are disposed at positions opposed to the image forming units 14K, 14Y, 14M, and 14C, respectively, and the toner images of the respective colors formed on the photoreceptor drums 152K, 152Y, 152M, and 152C are transferred onto the intermediate transfer belt 16 in multiple layers by the respective first transfer rolls 162. Residual toner adhering to the intermediate transfer belt 16 is removed by a cleaning blade or a brush of a belt cleaning device 189 provided downstream of a second transfer position.

A second transfer roll 186 which is brought into pressure contact with a backup roll 168 is disposed at the second transfer position on the sheet transport path 18, and the toner images of the respective colors which are transferred in multiple layers onto the intermediate transfer belt 16 are second transferred onto the recording medium 12 by pressure contact force and electrostatic force by the second transfer roll 186. The recording medium 12 to which the toner images of the respective colors are transferred is transported to the fixing device 19 by a transport belt 187 and a transport belt 188.

The fixing device 19 performs heat processing and pressure processing on the recording medium 12 to which the toner images of the respective colors are transferred, thereby melting and fixing the toners to the recording medium 12. The recording medium 12 on which the image has been formed in this way is delivered from the image forming apparatus 10 to the post-processing apparatus 20.

As illustrated in Fig. 1, the post-processing apparatus 20 includes a post-processing controller 40, a post-processing mechanism 21, and a discharge tray 22. The recording medium 12 on which an image is formed in the image forming apparatus 10 is subjected to post-processing in the post-processing mechanism 21 of the post-processing apparatus 20 and is discharged to the discharge tray 22.

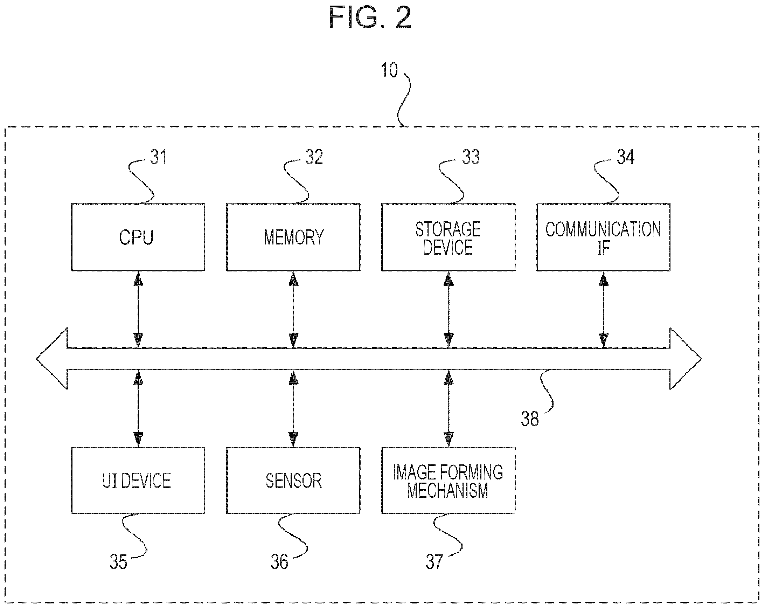

Next, a hardware configuration of the image forming apparatus 10 in the image forming system of the present exemplary embodiment is illustrated in Fig. 2.

As illustrated in Fig. 2, the image forming apparatus 10 includes a central processing unit (CPU) 31, a memory 32, a storage device 33 such as a hard disk drive, and a communication interface (abbreviated as "IF") 34 to transmit and receive data to and from an external device and the like via a network, a user interface (abbreviated as "UI") device 35 including a touch panel or a liquid crystal display and a keyboard, a sensor 36, and an image forming mechanism 37. These constituents are coupled to each other via a control bus 38.

The sensor 36 includes various sensors such as a sensor that detects the density of a toner image or the position of the toner image formed on the intermediate transfer belt 16 and a sensor that detects the temperature or the humidity in the image forming apparatus 10.

The image forming mechanism 37 includes all components for forming an image on the recording medium 12. Specifically, the image forming mechanism 37 includes various mechanisms for forming an image on the recording medium 12, such as the above-described image forming units 14K, 14Y, 14M, and 14C, and the intermediate transfer belt 16.

The CPU 31 is a processor that executes a predetermined process based on a control program stored in the memory 32 or the storage device 33 to control the operation of the image forming apparatus 10. In the present exemplary embodiment, the CPU 31 is described to read and execute the control program stored in the memory 32 or the storage device 33, but is not limited thereto. The control program may be provided in a form of being recorded in a computer-readable recording medium. For example, the program may be provided in a form of being recorded in an optical disc such as a compact disc (CD)-ROM and a digital versatile disc (DVD)-ROM, or in a form of being recorded in a semiconductor memory such as a universal serial bus (USB) memory and a memory card. Alternatively, the control program may be acquired from an external device via a communication line coupled to the communication interface 34. Further, for example, the control program may be provided as independent application software or may be incorporated into software of each device of the image forming apparatus 10 as a function.

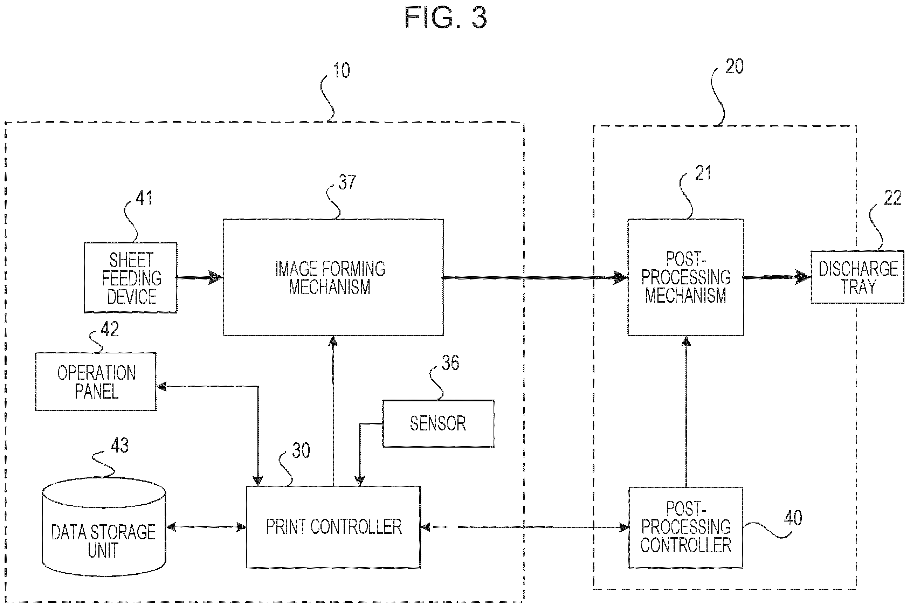

Fig. 3 is a block diagram illustrating a functional configuration of the image forming apparatus 10 and the post-processing apparatus 20 realized when the control program is executed.

As illustrated in Fig. 3, the image forming apparatus 10 of the present exemplary embodiment includes a sheet feeding device 41, an operation panel 42, a data storage unit 43, the image forming mechanism 37, the sensor 36, and the print controller 30. The post-processing apparatus 20 includes the post-processing mechanism 21, the post-processing controller 40, and the discharge tray 22.

The print controller 30 controls operations of the image forming mechanism 37, the sheet feeding device 41, and the like based on information from the sensor 36. The image forming mechanism 37 executes a process of forming an image on the recording medium 12 such as a print sheet fed from the sheet feeding device 41 based on the control by the print controller 30. Further, the print controller 30 receives an operation from a user via the operation panel 42, and displays various kinds of information on the operation panel 42. Furthermore, the data storage unit 43 stores various kinds of data used when the print controller 30 controls the image forming mechanism 37.

The recording medium 12 on which an image has been formed by the image forming mechanism 37 is subj ected to post-processing by the post-processing mechanism 21 of the post-processing apparatus 20 and is discharged to the discharge tray 22. The post-processing controller 40 controls the operation of the post-processing mechanism 21, and transmits and receives information to and from the print controller 30.

When bookbinding or the like is performed using the image forming system of the present exemplary embodiment, post-processing such as stapling or cutting is performed in the post-processing apparatus 20 coupled at the subsequent stage. However, the post-processing such as stapling or cutting takes time. For this reason, it is necessary to stop the supply of the next set of sheets in the image forming apparatus 10 until the post-processing is completed in the post-processing apparatus 20.

Here, the rotating members such as the photoreceptor drums 152K, 152Y, 152M, and 152C, and the intermediate transfer belt 16 each have a service life determined by wear due to rotation, and thus, the service life is shortened when the rotating members are rotated during unnecessary circumstances. When the rotation of the rotating members such as the photoreceptor drums 152K, 152Y, 152M, and 152C and the intermediate transfer belt 16 in the image forming mechanism 37 is stopped in the image forming apparatus 10 until the post-processing is completed in the post-processing apparatus 20, the service life of each of the rotating members is not decreased. However, once the rotating member is stopped, it takes a certain amount of time for the rotating member to restart and reach a steady speed. For this reason, with the rotation of the rotating members being always stopped until the post-processing is completed, the image formation cannot immediately be resumed even when the image formation is to be executed again, and the productivity of the image formation decreases.

In order to prevent the productivity from decreasing, it is necessary that the rotating members are continuously rotated until the post-processing is completed. There is a case that the productivity is increased by performing image quality adjustment in an image forming apparatus using the waiting time until the post-processing is completed. However, the image quality adjustment is not performed every time in the waiting time until the post-processing is completed. Further, when the image quality adjustment is not required, the rotating members in the image forming mechanism continue idle rotation. Furthermore, the idle rotation of the rotating members occurs as well when the image quality adjustment is quickly completed. There arises a problem that as the idle rotation time of the rotating members increases, the service life of each of the rotating members is shortened as described above.

The image forming apparatus 10 of the present exemplary embodiment extends the service life of each of the rotating members in the image forming mechanism 37 without decreasing the productivity of the image formation, as compared with the case that the rotating members of the image forming mechanism 37 are continuously rotated when the post-processing of the recording medium on which an image is formed is executed in the post-processing apparatus 20, by performing the following control.

The print controller 30 of the present exemplary embodiment stops the rotation of each of the rotating members such as the photoreceptor drums 152K, 152Y, 152M, and 152C in the image forming mechanism 37 when time calculated by subtracting time required for the image quality adjustment of an image to be formed from time required for the post-processing of the recording medium 12 on which an image is formed in the post-processing apparatus 20 is longer than set threshold time.

The print controller 30 does not stop the rotation of each of the rotating members in the image forming mechanism 37 when the time calculated by subtracting the time required for the image quality adjustment of an image to be formed from the time required for the post-processing of the recording medium 12 on which an image is formed in the post-processing apparatus 20 is equal to or less than the set threshold time.

Here, the threshold time is calculated based on a process speed which is an image forming speed when an image is formed in the image forming mechanism 37. Specifically, the threshold time calculated based on the process speed is a total value of time required to stop the rotating members, the minimum time required to keep the stop state of the rotating members, and time required to restart the stopped rotating members to the steady speed again at a certain process speed. A method of calculating the threshold time based on the process speed will be described later in detail.

Further, the time required for the image quality adjustment of an image to be formed described above is also calculated based on the process speed when an image is formed in the image forming mechanism 37. Specifically, the time required for the image quality adjustment of an image to be formed is calculated by dividing, by the process speed, an image quality adjustment distance which is required in accordance with the type of the image quality adjustment to be executed.

Here, the image quality adjustment means to adjust the density of each color, the forming position, and the like of an image formed on the recording medium 12. For example, in the image quality adjustment, correction is performed by forming a band image having uniform density formed only by toner on the intermediate transfer belt 16, reading the density of the band image by the sensor 36, and making the read density value be equal to a preset value. The image quality adjustment also includes a process of forming a toner image of a specific pattern on the intermediate transfer belt 16, reading the toner image by the sensor 36, and aligning positions at which the toner images of the respective colors are formed.

A specific example of calculation of the time required for such image quality adjustment will be described. For example, the print controller 30 determines a distance corresponding to N circumferences based on a circumferential length of the photoreceptor drum 152 as a rotational direction distance PI (mm). The rotational direction distance PI (mm) is defined as one surface, and the repetition number of rotation of the N circumferences of the photoreceptor drum 152 is defined as the number of surfaces Pc (surface). By defining in this way, the time required for certain image quality adjustment is calculated by the following equation.

Rotational direction distance PI (mm) $\times$ Number of surfaces Pc (surface) $\div$ Process speed (mm/sec)

As described above, the time required for the image quality adjustment is calculated by dividing the image quality adjustment distance required for the image quality adjustment by the process speed.

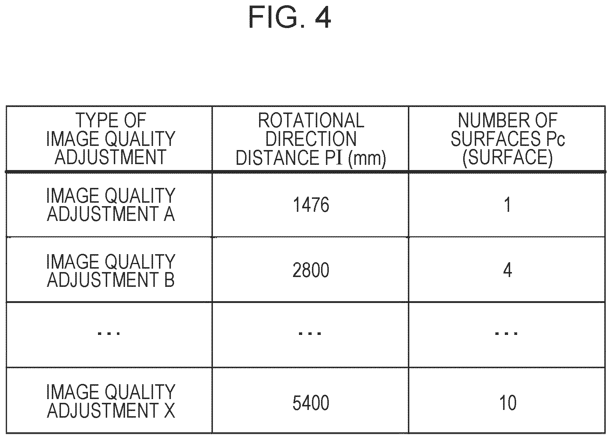

By creating in advance a calculation table of image quality adjustment time as illustrated in Fig. 4 in which the rotational direction distance PI and the number of surfaces Pc are set for each type of image quality adjustment, it is possible to calculate the image quality adjustment time corresponding to the content of the image quality adjustment to be executed. The calculation table of the image quality adjustment time is created in advance and stored in the data storage unit 43. Referring to an example of the calculation table of the image quality adjustment time illustrated in Fig. 4, when the type of the image quality adjustment is an image quality adjustment A, the rotational direction distance Pl is 1476 (mm), and the number of surfaces Pc is 1 (surface).

In addition, the print controller 30 acquires information on the time required for the post-processing of the recording medium 12 on which an image is formed in the post-processing apparatus 20, from the post-processing controller 40.

Next, a method of calculating the time, required to resume the rotation of each of the rotating members such as the photoreceptor drums 152 and the intermediate transfer belt 16 to the steady speed again after the rotation is temporarily stopped, will be described in detail.

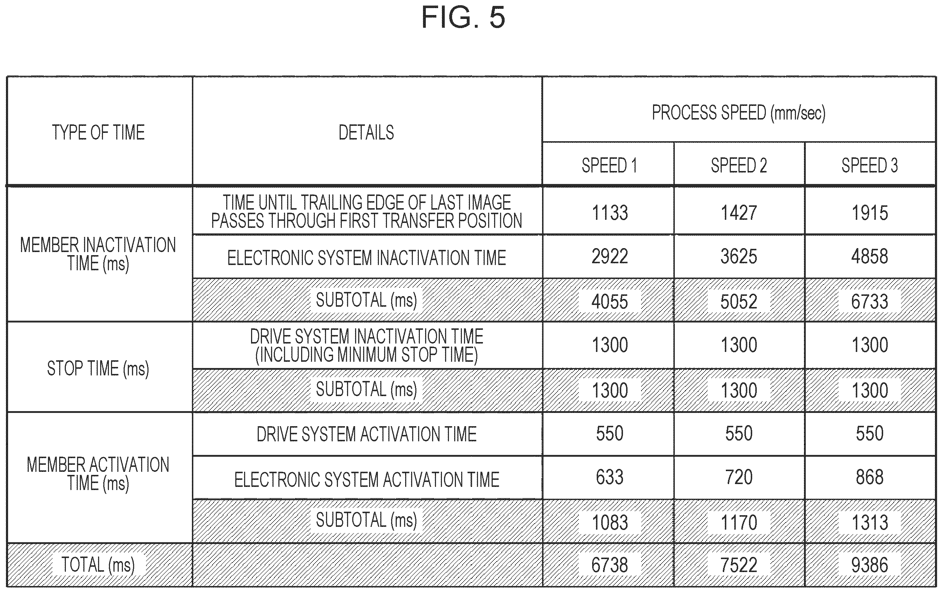

The print controller 30 calculates the time, required to resume the rotation of each of the rotating members to the steady speed again after the rotation is temporarily stopped, using the calculation table of inactivation time, stop time, and activation time of the rotating members as illustrated in Fig. 5. The calculation table of the inactivation time, the stop time, and the activation time of the rotating members is stored in the data storage unit 43.

First, the print controller 30 acquires information on the member inactivation time, the stop time, and the member activation time corresponding to the current process speed from the calculation table illustrated in Fig. 5. The print controller 30 calculates the total value of these times, thereby calculating the time required to resume the rotation of each of the rotating members to the steady speed again after the rotation is temporarily stopped, at the current process speed.

(1) The member inactivation time is calculated by the total of the time until the trailing edge of the last image passes through the first transfer position and electronic system inactivation time.
(2) The stop time is calculated by drive system inactivation time of a roller or the like. The drive system inactivation time includes the minimum time when the drive system is stopped.
(3) The member activation time is calculated by the total of the drive system activation time and the electronic system activation time.

In the calculation table of Fig. 5, the time converted by the process speed is set for an item in which the time is calculated based on distance.

Further, the time information in the calculation table as illustrated in Fig. 5 varies depending on color printing and monochrome printing, and therefore, the calculation table as illustrated in Fig. 5 is generated in advance for each of color printing and monochrome printing and stored in the data storage unit 43. Note that the calculation table illustrated in Fig. 5 is for color printing.

For example, when the process speed is speed 1, the member inactivation time is 4055 (mm/sec), the stop time is 1300 (mm/sec), the member activation time is 1083 (mm/sec), and the total value is 6738 (mm/sec). Accordingly, when the process speed is the speed 1, the print controller 30 calculates that the time required to resume the rotation of each of the rotating members to the steady speed again after the rotation is temporarily stopped is 6738 (mm/sec), thereby setting the calculated time as the threshold time and determining whether or not to stop the rotating members.

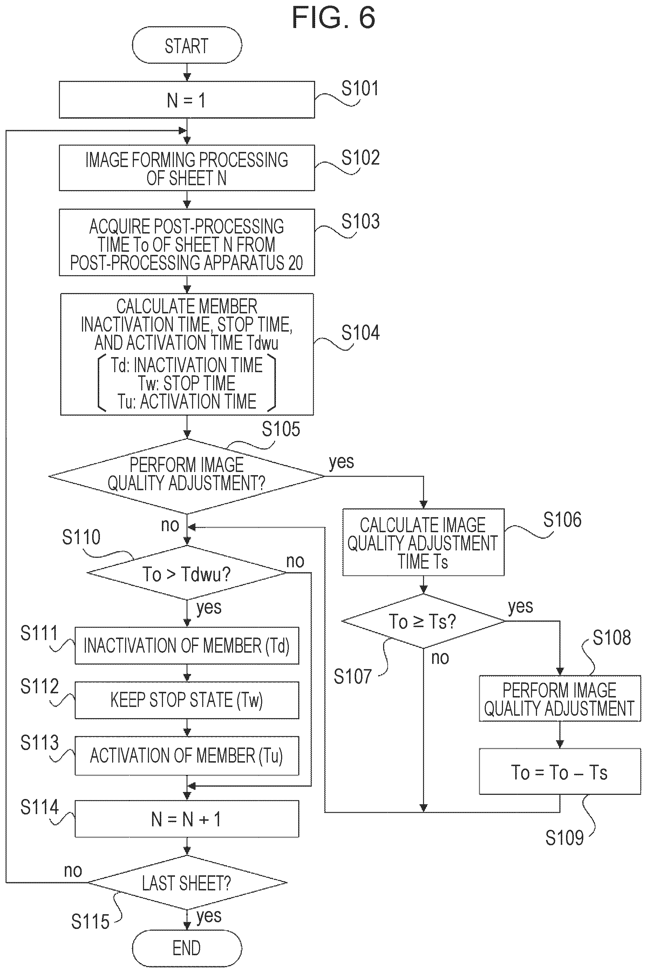

Next, a process of determining whether or not to stop the rotating members in the print controller 30 described above will be described with reference to the flowchart of Fig. 6.

First, the print controller 30 sets N to 1 in step S101. In step S102, the print controller 30 controls the sheet feeding device 41 and the image forming mechanism 37 so that the image forming processing of the sheet N is performed.

Next, in step S 103, the print controller 30 acquires post-processing time To (ms), which is the time required for the post-processing of the sheet N, from the post-processing apparatus 20. The post-processing apparatus 20 calculates the post-processing time required for the post-processing for each sheet based on the job information of the print job. Note that the post-processing time becomes long in most cases when the post-processing such as stapling or bookbinding is performed in units of sets. Further, when the post-processing time can be calculated in the image forming apparatus 10, the post-processing time may be calculated in the image forming apparatus 10.

Next, in step S104, the print controller 30 calculates time Tdwu (ms) required to inactivate, stop, and activate the rotating members such as the photoreceptor drums 152 and the intermediate transfer belt 16.

Specifically, the print controller 30 calculates each of the following times Td, Tw, and Tu, and calculates the total value as Tdwu (ms).

Td: time required to inactivate the rotating members
Tw: time required to keep the rotating members to stop
Tu: time required to activate the rotating members

$$Tdwu = Td + Tw + Tu \ (ms)$$

As described above, since the times Td, Tw, and Tu each vary in accordance with the process speed, they need to be calculated for each sheet using the calculation table illustrated in Fig. 5.

In step S105, the print controller 30 determines whether or not the image quality adjustment is to be performed. Specifically, the print controller 30 determines whether or not to perform the image quality adjustment in order to maintain the image quality based on information such as temperature, humidity, elapsed time from the previous image quality adjustment, and the number of printing sheets. The image quality adjustment may be performed before or after the execution of the print job is started, and further, the image quality adjustment may be performed during the execution of the print job.

In a case that it is determined that image quality adjustment is to be performed in step S105, the print controller 30 calculates, in step S106, required image quality adjustment time Ts (ms) in accordance with the type of image quality adjustment. Specifically, the print controller 30 calculates the image quality adjustment time Ts based on the calculation table of the image quality adjustment time as illustrated in Fig. 4. When a plurality of types of image quality adjustments are executed at the same time, the total value of the image quality adjustment times of the respective image quality adjustments is calculated as the image quality adjustment time Ts.

Next, in step S107, the print controller 30 determines whether or not the post-processing time To is equal to or longer than the image quality adjustment time Ts. Here, in a case that it is determined that the post-processing time To is neither equal to nor longer than the image quality adjustment time Ts, that is, the post-processing time To is shorter than the image quality adjustment time Ts, the print controller 30 does not perform the image quality adjustment because the productivity of the print processing decreases. In this case, the print controller 30 executes the image quality adjustment at another timing.

In a case that it is determined in step S107 that the post-processing time To is equal to or longer than the image quality adjustment time Ts, the print controller 30 performs the image quality adjustment in step S108. In this case, the image quality adjustment is performed in the image forming apparatus 10 while the post-processing is performed in the post-processing apparatus 20.

After the image quality adjustment, the print controller 30 updates the post-processing time To by subtracting the image quality adjustment time Ts from the post-processing time To in step S109.

Next, in a case that the print controller 30 determines not to perform the image quality adjustment in step S105, in a case that the print controller 30 determines that the post-processing time To is neither equal to nor longer than the image quality adjustment time Ts in step S107, or after the completion of the processing in step S109, the print controller 30 determines whether or not the post-processing time To is longer than the time Tdwu required to inactivate, stop, and activate the rotating members in step S110.

In a case that it is determined that the post-processing time To is equal to or less than Tdwu in step S110, the print controller 30 does not stop the rotating members and maintains the idle rotation state until the post-processing is completed.

In a case that it is determined that the post-processing time To is longer than the Tdwu in step S110, the print controller 30 performs inactivation of each of the rotating members, keeping the stop state, and activation of the rotating member in steps S111 to S113. By performing such processing, in a period in which the post-processing is performed in the post-processing apparatus 20, the rotation of each of the rotating members is temporarily stopped after the image quality adjustment, and the rotation of each of the rotating members is returned to a steady operation state before the resumption of the next print processing.

The print controller 30, then, adds one to the value of N in step S114. When it is determined that the post-processing time To is equal to or less than the Tdwu in step S110, the print controller 30 directly proceeds to step S114 and adds one to the value of N. In step S115, the print controller 30 determines whether or not the sheet currently being processed is the last sheet. When it is determined that the sheet currently being processed is the last sheet in step S 115, the print controller 30 finishes the process. When it is determined that the sheet currently being processed is not the last sheet in step S 115, the print controller 30 returns to the processing of step S 102.

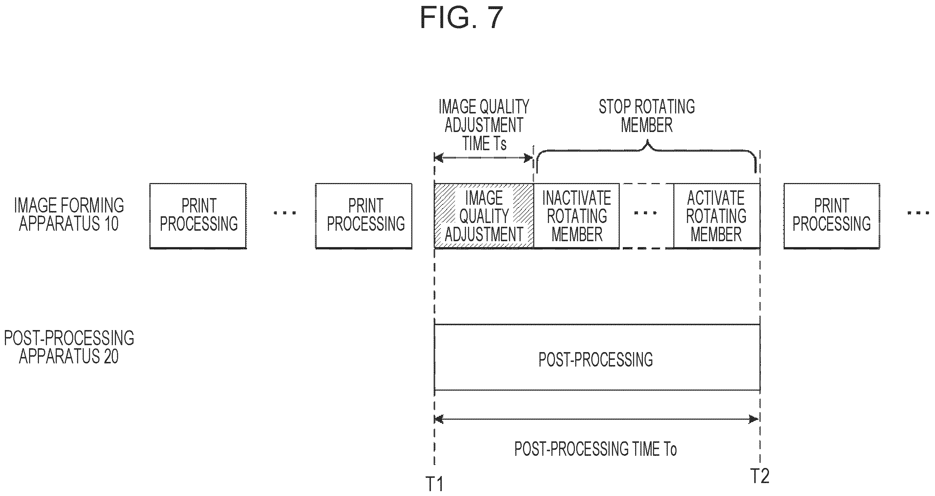

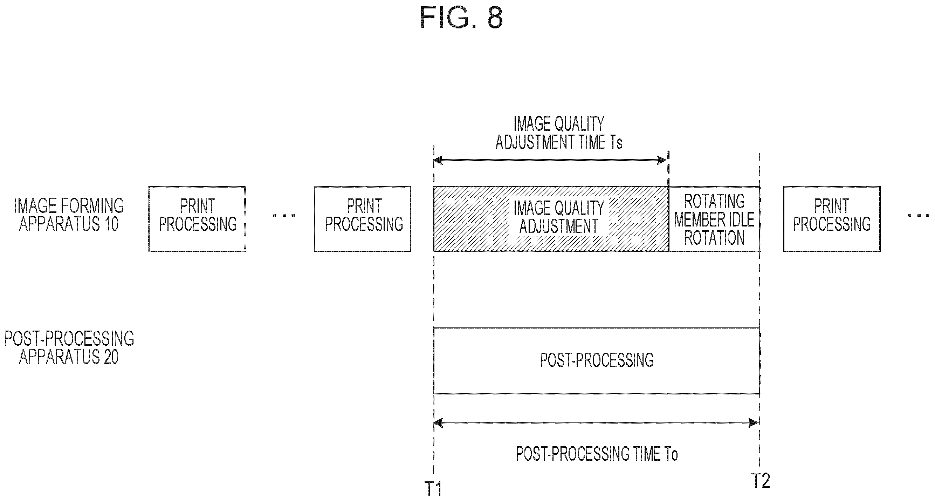

Next, with reference to Figs. 7 and 8, a description will be given of a case that the rotating members are stopped during the post-processing period and a case that the rotating members are not stopped during the post-processing period, by performing the above-described processing. Fig. 7 is a chart for explaining the timing when the rotating members are stopped. Fig. 8 is a chart for explaining the timing when the rotating members are not stopped.

In Fig. 7, the time obtained by subtracting the image quality adjustment time Ts from the post-processing time To is longer than the time Tdwu required to inactivate, stop, and activate the rotating members. For this reason, it can be seen that the image quality adjustment is executed at the same time when the post-processing is started at time T1, and inactivation of each of the rotating members, keeping the stop state, and activation of each of the rotating members are performed by time T2 when the post-processing thereafter is completed.

In Fig. 8, the time obtained by subtracting the image quality adjustment time Ts from the post-processing time To is equal to or less than the time Tdwu required to inactivate, stop, and activate the rotating members. For this reason, it can be seen that the image quality adjustment is executed at the same time when the post-processing is started at the time T1, but the operating state of each of the rotating members is maintained to be in the idle rotation state until the time T2 when the post-processing thereafter is completed.

Note that the print controller 30 may receive a selection result indicating which one of a productivity priority mode and a service life priority mode is selected by a user via the operation panel 42. In a case that the productivity priority mode is selected, the print controller 30 stops the rotation of each of the rotating members in the image forming mechanism 37, when the time, calculated by subtracting the time required for the image quality adjustment of an image to be formed from the time required for the post-processing of the recording medium 12 on which an image is formed in the post-processing apparatus 20, is longer than the set threshold time.

Further, in a case that the productivity priority mode is selected, the print controller 30 does not stop the rotation of each of the rotating members in the image forming mechanism 37, when the time, calculated by subtracting the time required for the image quality adjustment of an image to be formed from the time required for the post-processing of the recording medium 12 on which an image is formed in the post-processing apparatus 20, is equal to or less than the set threshold time. That is, when the productivity priority mode is selected, it is switched whether to stop the rotating members during the post-processing period or to keep the rotating members in the idle rotation state in which the rotation is continued, based on the criterion as described above.

When the service life priority mode is selected, the print controller 30 stops the rotation of each of the rotating members in the image forming mechanism 37 even when the time, calculated by subtracting the time required for the image quality adjustment of an image to be formed from the time required for the post-processing of the recording medium 12 on which an image is formed in the post-processing apparatus 20, is equal to or less than the set threshold time. That is, when the service life priority mode is selected, the print controller 30 stops the rotation of each of the rotating members when the image quality adjustment processing is completed during the post-processing period regardless of the remaining time. Further, when the service life priority mode is selected and the image quality adjustment is not executed during the post-processing period, the rotation of each of the rotating members is always stopped when the post-processing is started.

When the service life priority mode is selected, idle rotation of the rotating members during the post-processing period does not occur, so that the service life of the rotating members can be extended although the productivity decreases in some cases. When the productivity priority mode is selected, idle rotation may occur more often during the post-processing period as compared with the case when the service life priority mode is selected, but the productivity is increased because the image formation can be started immediately after the post-processing.

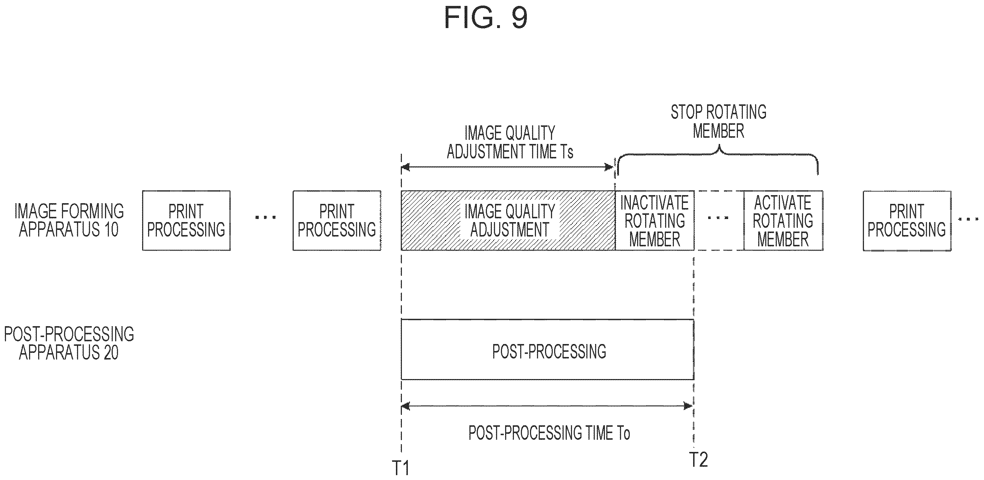

Fig. 9 illustrates the operation timing of the image forming apparatus 10 during the post-processing time when the service life priority mode is selected as described above.

Referring to Fig. 9, the image quality adjustment is executed at the same time when the post-processing is started at the time T1. However, in Fig. 9, although the time obtained by subtracting the image quality adjustment time Ts from the post-processing time To is longer than the time Tdwu required to inactivate, stop, and activate the rotating members, the stopping processing of each of the rotating members is executed. For this reason, it can be seen that the restart of the rotating members is not in time by the time T2 when the post-processing is completed and the print processing of the next sheet is delayed.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The term "system" according to the present exemplary embodiment includes both a system constituted of a plurality of apparatuses and a system constituted of a single apparatus.

The present disclosure is also applicable to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

Appendix

(((1))) An image forming system comprising: an image forming mechanism configured to form an image on a recording medium; and

a processor configured to
stop rotation of a rotating member in the image forming mechanism when time, calculated by subtracting time required for image quality adjustment of an image to be formed from time required for post-processing of a recording medium on which an image is formed in a post-processing apparatus, is longer than set threshold time.

(((2))) The image forming system according to (((1))), wherein the processor is configured not to stop the rotation of the rotating member in the image forming mechanism when the time, calculated by subtracting the time required for image quality adjustment of an image to be formed from the time required for the post-processing of a recording medium on which an image is formed in the post-processing apparatus, is equal to or less than the set threshold time.

(((3))) The image forming system according to (((1))) or (((2))), wherein the threshold time is calculated based on an image forming speed when an image is formed in the image forming mechanism.

(((4))) The image forming system according to (((3))), wherein the threshold time calculated based on the image forming speed is a total value of time required to stop the rotating member, minimum time required to keep a stop state of the rotating member, and time required to restart the stopped rotating member to a steady speed again at a certain image forming speed.

(((5))) The image forming system according to any one of (((1))) to (((4))), wherein the time required for the image quality adjustment of an image to be formed is calculated based on an image forming speed when an image is formed in the image forming mechanism.

(((6))) The image forming system according to (((5))), wherein the time required for the image quality adjustment of an image to be formed is calculated by dividing an image quality adjustment distance required in accordance with a type of the image quality adjustment to be executed by the image forming speed.

(((7))) The image forming system according to any one of (((1))) to (((6))), wherein the processor is configured to receive a selection result indicating which one of a productivity priority mode and a service life priority mode is selected,

in a case that the productivity priority mode is selected, when the time, calculated by subtracting the time required for the image quality adjustment of an image to be formed from the time required for the post-processing of a recording medium on which an image is formed in the post-processing apparatus, is longer than the set threshold time, the rotation of the rotating member in the image forming mechanism is stopped, and

in a case that the service life priority mode is selected, even when the time, calculated by subtracting the time required for the image quality adjustment of an image to be formed from the time required for the post-processing of a recording medium on which the image is formed in the post-processing apparatus, is equal to or less than the set threshold time, the rotation of the rotating member in the image forming mechanism is stopped.

(((8))) A program causing a computer to execute a process comprising:

acquiring time required for post-processing of a recording medium on which an image is formed in a post-processing apparatus; and stopping rotation of a rotating member in an image forming mechanism for forming an image on a recording medium when time, calculated by subtracting time required for image quality adjustment of an image to be formed from the acquired time required for the post-processing, is longer than set threshold time.

With the image forming system of (((1))), it is possible to extend the service life of the rotating member in the image forming mechanism without decreasing productivity of image formation, in comparison with a case that the rotating member of the image forming mechanism is continuously rotated when post-processing of a recording medium on which an image is formed is executed in the post-processing apparatus.

With the image forming system of (((2))), it is possible to extend the service life of the rotating member in the image forming mechanism without decreasing productivity of image formation, in comparison with a case that the rotating member of the image forming mechanism is continuously rotated when post-processing of a recording medium on which an image is formed is executed in the post-processing apparatus.

With the image forming system of (((3))), even when the image forming speed changes, it is possible to calculate the threshold time according to the image forming speed.

With the image forming system of (((4))), it is possible to set, as the threshold time, time required from stopping of the rotating member to restarting of the rotating member.

With the image forming system of (((5))), even when the image forming speed changes, it is possible to calculate the image quality adjustment time according to the image forming speed.

With the image forming system of (((6))), it is possible to calculate the image quality adjustment time according to the type of image quality adjustment to be executed.

With the image forming system of (((7))), a user can select whether to prioritize productivity or extending the service life of the rotating member.

With the program of (((8))), it is possible to extend the service life of the rotating member in the image forming mechanism without decreasing productivity of image formation, in comparison with a case that the rotating member of the image forming mechanism is continuously rotated when post-processing of a recording medium on which an image is formed is executed in the post-processing apparatus.

**Claims**

1. An image forming system comprising:

   an image forming mechanism configured to form an image on a recording medium; and
   a processor configured to stop rotation of a rotating member in the image forming mechanism when time, calculated by subtracting time required for image quality adjustment of an image to be formed from time required for post-processing of a recording medium on which an image is formed in a post-processing apparatus, is longer than set threshold time.

2. The image forming system according to claim 1, wherein the processor is configured not to stop the rotation of the rotating member in the image forming mechanism when the time, calculated by subtracting the time required for image quality adjustment of an image to be formed from the time required for the post-processing of a recording medium on which an image is formed in the post-processing apparatus, is equal to or less than the set threshold time.

3. The image forming system according to claim 1 or 2, wherein the threshold time is calculated based on an image forming speed when an image is formed in the image forming mechanism.

4. The image forming system according to claim 3, wherein the threshold time calculated based on the image forming speed is a total value of time required to stop the rotating member, minimum time required to keep a stop state of the rotating member, and time required to restart the stopped rotating member to a steady speed again at a certain image forming speed.

5. The image forming system according to any one of claims 1 to 4, wherein the time required for the image quality adjustment of an image to be formed is calculated based on an image forming speed when an image is formed in the image forming mechanism.

6. The image forming system according to claim 5, wherein the time required for the image quality adjustment of an image to be formed is calculated by dividing an image quality adjustment distance required in accordance with a type of the image quality adjustment to be executed by the image forming speed.

7. The image forming system according to any one of claims 1 to 6, wherein

   the processor is configured to receive a selection result indicating which one of a productivity priority mode and a service life priority mode is selected,
   in a case that the productivity priority mode is selected, when the time, calculated by subtracting the time required for the image quality adjustment of an image to be formed from the time required for the post-processing of a recording medium on which an image is formed in the post-processing apparatus, is longer than the set threshold time, the rotation of the rotating member in the image forming mechanism is stopped, and
   in a case that the service life priority mode is selected, even when the time, calculated by subtracting the time required for the image quality adjustment of an image to be formed from the time required for the post-processing of a recording medium on which the image is formed in the post-processing apparatus, is equal to or less than the set threshold time, the rotation of the rotating member in the image forming mechanism is stopped.

8. A program causing a computer to execute a process comprising:

   acquiring time required for post-processing of a recording medium on which an image is formed in a post-processing apparatus; and
   stopping rotation of a rotating member in an image forming mechanism for forming an image on a recording medium when time, calculated by subtracting time required for image quality adjustment of an image to be formed from the acquired time required for the post-processing, is longer than set threshold time.

# FIG. 1

FIG. 2

FIG. 3

20
21 POST-PROCESSING MECHANISM
22 DISCHARGE TRAY
40 POST-PROCESSING CONTROLLER

10
37 IMAGE FORMING MECHANISM
36 SENSOR
30 PRINT CONTROLLER
41 SHEET FEEDING DEVICE
42 OPERATION PANEL
43 DATA STORAGE UNIT

# FIG. 4

| TYPE OF IMAGE QUALITY ADJUSTMENT | ROTATIONAL DIRECTION DISTANCE PI (mm) | NUMBER OF SURFACES Pc (SURFACE) |
|---|---|---|
| IMAGE QUALITY ADJUSTMENT A | 1476 | 1 |
| IMAGE QUALITY ADJUSTMENT B | 2800 | 4 |
| . . . | . . . | . . . |
| IMAGE QUALITY ADJUSTMENT X | 5400 | 10 |

15

## FIG. 5

| TYPE OF TIME | DETAILS | PROCESS SPEED (mm/sec) | | |
|---|---|---|---|---|
| | | SPEED 1 | SPEED 2 | SPEED 3 |
| MEMBER INACTIVATION TIME (ms) | TIME UNTIL TRAILING EDGE OF LAST IMAGE PASSES THROUGH FIRST TRANSFER POSITION | 1133 | 1427 | 1915 |
| | ELECTRONIC SYSTEM INACTIVATION TIME | 2922 | 3625 | 4858 |
| | SUBTOTAL (ms) | 4055 | 5052 | 6733 |
| STOP TIME (ms) | DRIVE SYSTEM INACTIVATION TIME (INCLUDING MINIMUM STOP TIME) | 1300 | 1300 | 1300 |
| | SUBTOTAL (ms) | 1300 | 1300 | 1300 |
| MEMBER ACTIVATION TIME (ms) | DRIVE SYSTEM ACTIVATION TIME | 550 | 550 | 550 |
| | ELECTRONIC SYSTEM ACTIVATION TIME | 633 | 720 | 868 |
| | SUBTOTAL (ms) | 1083 | 1170 | 1313 |
| TOTAL (ms) | | 6738 | 7522 | 9386 |

EP 4 657 165 A2

EP 4 657 165 A2

# FIG. 6

START

N = 1 — S101

IMAGE FORMING PROCESSING OF SHEET N — S102

ACQUIRE POST-PROCESSING TIME To OF SHEET N FROM POST-PROCESSING APPARATUS 20 — S103

CALCULATE MEMBER INACTIVATION TIME, STOP TIME, AND ACTIVATION TIME Tdwu
[ Td: INACTIVATION TIME
Tw: STOP TIME
Tu: ACTIVATION TIME ] — S104

PERFORM IMAGE QUALITY ADJUSTMENT? — S105

yes → CALCULATE IMAGE QUALITY ADJUSTMENT TIME Ts — S106

$To \geq Ts$? — S107
yes → PERFORM IMAGE QUALITY ADJUSTMENT — S108
$To = To - Ts$ — S109
no

no →

S110 — $To > Tdwu$?
no →
yes

S111 — INACTIVATION OF MEMBER (Td)

S112 — KEEP STOP STATE (Tw)

S113 — ACTIVATION OF MEMBER (Tu)

S114 — N = N + 1

LAST SHEET? — S115
no →
yes

END

17

# FIG. 7

IMAGE QUALITY ADJUSTMENT TIME Ts

STOP ROTATING MEMBER

**IMAGE FORMING APPARATUS 10**

| PRINT PROCESSING | . . . | PRINT PROCESSING | IMAGE QUALITY ADJUSTMENT | INACTIVATE ROTATING MEMBER | . . . | ACTIVATE ROTATING MEMBER | PRINT PROCESSING | . . . |

**POST-PROCESSING APPARATUS 20**

POST-PROCESSING

POST-PROCESSING TIME To

T1    T2

# FIG. 8

IMAGE QUALITY
ADJUSTMENT TIME Ts

IMAGE FORMING APPARATUS 10 | PRINT PROCESSING | ... | PRINT PROCESSING | IMAGE QUALITY ADJUSTMENT | ROTATING MEMBER IDLE ROTATION | PRINT PROCESSING | ...

POST-PROCESSING APPARATUS 20 | POST-PROCESSING

POST-PROCESSING TIME To

T1

T2

# FIG. 9

IMAGE FORMING APPARATUS 10

PRINT PROCESSING ... PRINT PROCESSING

IMAGE QUALITY ADJUSTMENT TIME Ts

IMAGE QUALITY ADJUSTMENT

STOP ROTATING MEMBER

INACTIVATE ROTATING MEMBER ... ACTIVATE ROTATING MEMBER

PRINT PROCESSING ...

POST-PROCESSING APPARATUS 20

POST-PROCESSING

POST-PROCESSING TIME To

T1                T2

EP 4 657 165 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007033829 A
- JP 2007050545 A